# EUROPEAN PATENT APPLICATION

(11) **EP 4 451 258 A1**
(43) Date of publication of application: **23.10.2024**
(21) Application number: 21827533.7
(22) Date of filing: 21.12.2021
(51) Int. Cl.: G09G 3/34

(54) **DISPLAY PANEL AND CONTROL METHOD THEREFOR**

(30) Priority: 14.12.2021 CN 202111525789
(71) Applicant: TCL CHINA STAR OPTOELECTRONICS TECHNOLOGY CO., LTD., Shenzhen, Guangdong 518132 (CN)
(72) Inventor: HU, Xiong, Shenzhen, Guangdong 518132 (CN)
(74) Representative: Murgitroyd & Company
(86) International application number: PCT/CN2021/140093
(87) International publication number: WO 2023/108721

(57) **Abstract**

The present application provides a display panel and a driving method thereof. The method of driving the display panel includes: acquiring a frequency state of the display panel; determining a target sub-backlight clock signal of a frame to be displayed according to a preset rule and a preset refresh rate of the frame to be displayed when the frequency state is a frequency conversion state, wherein a duration of the target sub-backlight clock signal is equal to a reciprocal of the preset refresh rate, and the target sub-backlight clock signal is used to drive a backlight plate in the display panel to emit light within the duration of the target sub-backlight clock signal.

## Description

### BACKGROUND OF INVENTION

### Field of Invention

The present application relates to a field of display technology, in particular to a field of display panel manufacturing technology, and specifically to a display panel and a driving method thereof.

### Description of Prior Art

With the popularity of liquid crystal display (LCD) panels, variable refresh rate (VRR) technology has emerged for realizing matching of a refresh frequency of the display images with a refresh frequency of the display.

The display image of the LCD panel comes from a light source provided by a backlight. Currently, a backlight synchronization signal with a same frequency as a display synchronization signal is used to control a backlight clock signal, and the refresh frequency of the normal display clock signal is used as a fixed frequency of the backlight clock signal to drive the backlight to provide a light source required by the LCD. However, the applicant found that the refresh frequencies of different frames in the FreeSync technology are different, that is, the refresh frequency of the backlight clock signal will be greater or less than the refresh frequency of the real-time image, which causes the light source to be turned off in advance, resulting in a dark state phenomenon or an image loss, reducing image display quality of the LCD panel.

### SUMMARY OF INVENTION

An embodiment of the present application provides a display panel and a driving method thereof to solve the problem that the refresh frequency of the existing backlight clock signal does not match the refresh frequency of the real-time image, which causes the light source to be turned off in advance, resulting in a dark state phenomenon or an image loss, reducing image display quality of the LCD panel.

An embodiment of the present application provides a method of driving a display panel, including:

acquiring a frequency state of the display panel;

adjusting a target sub-backlight clock signal of a frame to be displayed according to a preset rule and a preset refresh rate of the frame to be displayed when the frequency state is a frequency conversion state, wherein a duration of the target sub-backlight clock signal is equal to a preset period, the preset period is a reciprocal of the preset refresh rate, and the target sub-backlight clock signal is used to drive a backlight plate in the display panel to emit light within the duration of the target sub-backlight clock signal.

The present application provides a display panel and a driving method thereof. The method of driving the display panel includes: acquiring a frequency state of the display panel; determining a target sub-backlight clock signal of a frame to be displayed according to a preset rule and a preset refresh rate of the frame to be displayed when the frequency state is a frequency conversion state, wherein a duration of the target sub-backlight clock signal is equal to a preset period, the preset period is a reciprocal of the preset refresh rate, and the target sub-backlight clock signal is used to drive a backlight plate in the display panel to emit light within the duration of the target sub-backlight clock signal. The present application determines the target sub-backlight clock signal of the frame to be displayed according to the preset refresh rate and the preset rule. Since the duration of the target sub-backlight clock signal is equal to a duration required for displaying the frame to be displayed, it can realize that a light-emitting duration of the backlight is equal to the duration required for displaying the frame to be displayed. In the frame to be displayed, it can prevent the light-emitting duration of the backlight from being too short to result in a dark state image during a latter part of the period, and it can also prevent the light-emitting duration of the backlight from being a too long to occupy a next frame to be displayed, which causes the backlight of the next frame to be inaccurate, and results in image loss. As such, the quality of the display image of the display panel can be improved.

### BRIEF DESCRIPTION OF DRAWINGS

In order to more clearly illustrate the technical solutions of the embodiments of the application, the drawings illustrating the embodiments will be briefly described below. Obviously, the drawings in the following description merely illustrate some embodiments of the present invention. Other drawings may also be obtained by those skilled in the art according to these FIGs. without paying creative work.

In order to more clearly illustrate the technical solutions of the embodiments of the application, the drawings illustrating the embodiments will be briefly described below. Obviously, the drawings in the following description merely illustrate some embodiments of the present invention. Other drawings may also be obtained by those skilled in the art according to these FIGs. without paying creative work.
FIG. 1 is a flowchart of a method of driving a display panel provided by one of the embodiments of the present application.
FIG. 2 is a waveform diagram of some of the signals involved in the method of driving the display panel provided by one of the embodiments of the present application.
FIG. 3 is a waveform diagram of some signals involved in a method of driving a display panel in the prior art.
FIG. 4 is a structural block diagram of a display panel provided by one of the embodiments of the present application.
FIG. 5 is a structural block diagram of another display panel provided by one of the embodiments of the present application.

### DETAILED DESCRIPTION OF PREFERRED EMBODIMENTS

The technical solutions in the embodiments of the present application will be clearly and completely described below. Obviously, the described embodiments are only a part of the embodiments of the present application, but not all of the embodiments. Based on the embodiments in the present application, all other embodiments obtained by a person of ordinary skill in the art without creative efforts shall fall within the protection scope of the present application.

The terms "first", "second", "third", etc. in this application are used to distinguish different objects, rather than to describe a specific sequence. In addition, the terms "including" and "having" and any variations thereof are intended to cover non-exclusive inclusions. For example, a process, method, system, product, or device that includes a series of steps or modules is not particularly limited to the listed steps or modules, but optionally includes unlisted steps or modules, or optionally also includes Other steps or modules inherent to these processes, methods, products or equipment.

Reference throughout this specification to "one embodiment" or "an embodiment" means that a particular feature, structure, or characteristic described in conjunction with the embodiment is included in at least one embodiment of the present disclosure. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

An embodiment of the present application provides a method of driving a display panel, and the method of driving the display panel includes but is not particularly limited to the following embodiments and combinations thereof.

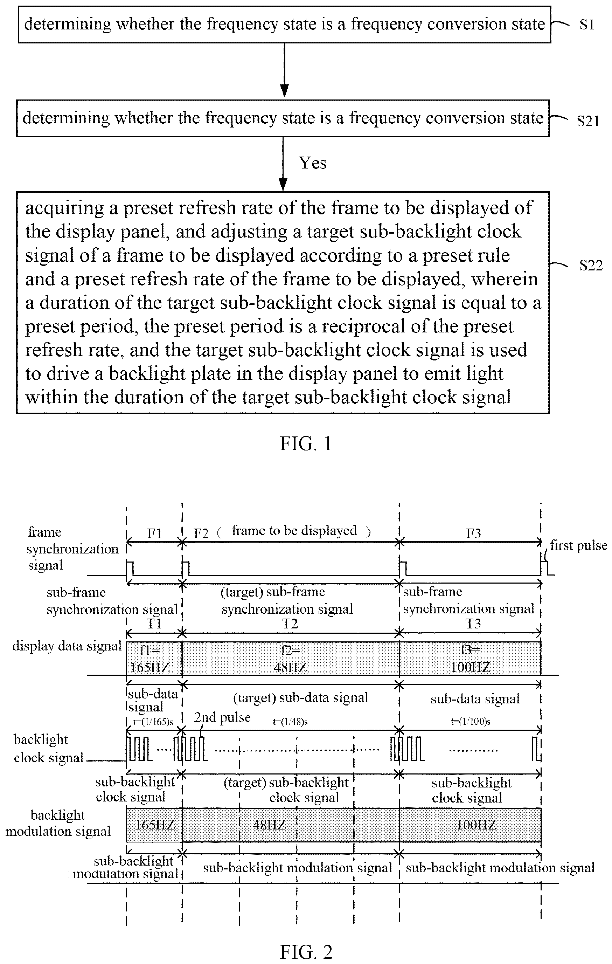

In one embodiment, as shown in FIG. 1, the method of driving the display panel includes but is not particularly limited to the following steps.

S1: acquiring a frequency state of the display panel.

The display panel can be but not particularly limited to a liquid crystal panel, as long as the display panel can be combined with a switch device to control an amount of light allowed by each sub-pixel to emit through the backlight to show a corresponding brightness, so as to realize the brightness display at multiple sub-pixels for image display. Each of the multiple signals in the present application can be considered as a signal loaded on any sub-pixel or on the backlight corresponding to the sub-pixel. It can be divided into multiple frames in the process of image display on the display panel, and the refresh rate of each frame can be the same as or different from the refresh rate of the previous frame.

The frequency state can be understood as a characterization of whether the refresh rates of adj acent ones of the frames are the same during the process of displaying the image on the display panel, or whether a difference between the refresh rates of consecutive multiple frames is too large. For example, when the display panel turns on the FreeSync function or performs channel switching, the refresh rates of adjacent ones of the frames may be different. Specifically, according to the definition of refresh rate, that is, a number of frames displayed per second, it can be understood that the duration required for each frame to be displayed is a reciprocal of the corresponding refresh rate, that is, compared with a frame having a relatively large refresh rate, a frame having a smaller refresh rate exhibit a less number of frames per second, that is, a duration required for the frame with a smaller refresh rate to display is relatively long, and a duration required for the frame having a relatively large refresh rate to display is relatively short.

S21: determining whether the frequency state is a frequency conversion state.

In view of the above discussion, the frequency conversion state can be understood that the refresh rates of adj acent ones of the frames are different, that is, the refresh rate of the frame to be displayed changes relative to the refresh rate of the current display frame, or the difference between the refresh rates of consecutive multiple frames is too large.

If the frequency state is the frequency conversion state, the following processes are executed:
S22. acquiring a preset refresh rate of the frame to be displayed of the display panel, and adjusting a target sub-backlight clock signal of a frame to be displayed according to a preset rule and a preset refresh rate of the frame to be displayed, wherein a duration of the target sub-backlight clock signal is equal to a preset period, the preset period is a reciprocal of the preset refresh rate, and the target sub-backlight clock signal is used to drive a backlight plate in the display panel to emit light within the duration of the target sub-backlight clock signal. It is appreciated that the preset period is a reciprocal of the preset refresh rate, and it is not particularly limited that the preset period is strictly identical to the reciprocal of the preset refresh rate, wherein there may be a tolerable range of error or difference between the preset period and the reciprocal of the preset refresh rate. For example, when the preset refresh rate is 165HZ, the reciprocal of the preset refresh rate is (1/165)s, and the preset period can be (1/165)s, (1/166)s, (1/167) s, (1/168)s...(1/174)s, (1/175)s, etc., the preset period can be slightly smaller than the reciprocal of the preset refresh rate, and the range or the difference or the error between the preset period and the reciprocal of the preset refresh rate can be set according to actual situations, as long as the dark state can improve the display, which is used as a standard.

It should be noted that, in view of the above discussion, the frequency state is the frequency conversion state, and it is not particularly limited that whether the refresh rates of the corresponding adjacent ones of the frames are the same, or whether the difference between the refresh rates of consecutive multiple frames is too large, and it is emphasized that the step S22 of "determining the target sub-backlight clock signal of the frame to be displayed" is executed depending on the condition "frequency state is the frequency conversion state", which is only to emphasize a correlation therebetween, that is, whether the step S22 of "determining the target sub-backlight clock signal of the frame to be displayed" is executed depends on whether the frequency state is the frequency conversion state. Further, when executing the step of "determining the target sub-backlight clock signal of the frame to be displayed", it may specifically include the step of "acquiring the preset refresh rate of the frame to be displayed of the display panel, and determining the target sub-backlight clock signal of the frame to be displayed according to the preset rule and the preset refresh rate of the frame to be displayed of the display panel". Further, as shown in FIG. 2, multiple sub-backlight clock signals corresponding to multiple frames are formed as a backlight clock signal.

The preset rule can be acquired through simulation or experiment in advance, and stored in the display panel. The preset rule can include the refresh rates of the multiple frames and the sub-backlight signals of the multiple frames. Specifically, the preset rule can be but not particularly limited to a formula or mapping table. For example, when relationships between the refresh rates of the frames and the corresponding sub-backlight signals are the same, a formula can be used as a preset rule to characterize the relationships between the refresh rates of the frames and the corresponding sub-backlight signals; or for example, when the relationships between the refresh rates of the frames and the corresponding sub-backlight signals are different, a mapping table can be used to characterize each frame and the corresponding sub-backlight signal. In view of the above discussion, the larger the refresh rate of each frame, the shorter the duration required to display the frame, and vice versa; the sub-backlight signal can be considered as the signal required for the backlight to provide the light source for each frame; and it can be considered that the longer the duration of the sub-backlight signal, the longer the duration that can drive the backlight to emit light, and vice versa. It should be noted that within the duration of the sub-backlight signal, it can be considered that the backlight plate continues to emit light or emits light according to a certain rule.

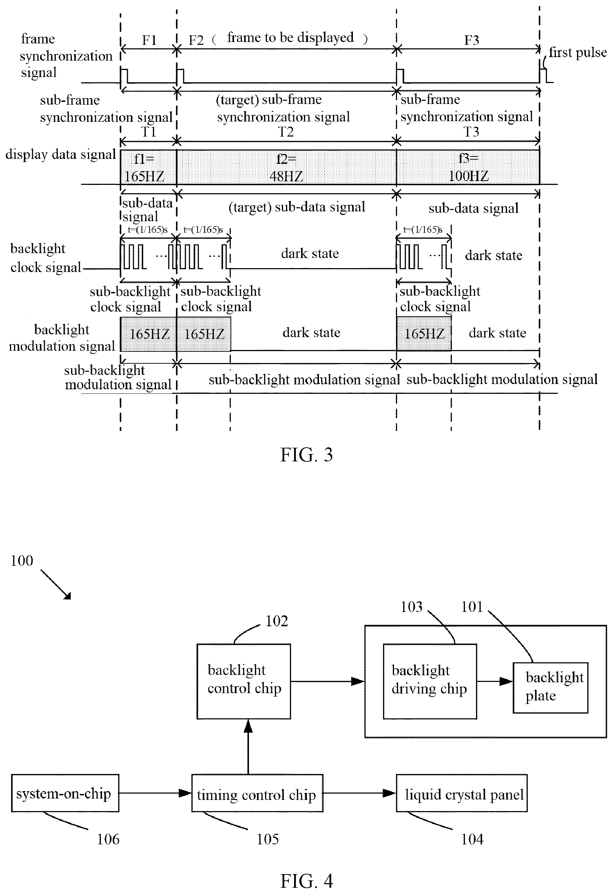

It should be noted that, as shown in FIG. 3, the refresh rate f1 of the first frame F 1, the refresh rate of f2 of the second frame F2, and the refresh rate of f3 of the third frame F3 are illustrated by taking 165HZ, 48HZ, and 100HZ respectively as an example; that is, the duration T1 required for the first frame to display the duration T2 required for the second frame to display, and the duration T3 required for the third frame to display are (1/165)s, (1/48)s, (1/100)s respectively, that is, T2 is greater than T1, and T3 is less than T2. If the refresh rate f1 is used to drive the backlight to emit light in the first frame F 1, by way of example, the first frame F 1 is switched to the second frame F2 while still adopting the refresh rate f1 to drive the backlight to emit light. The duration of driving the backlight to emit light is shorter than (1/48)s, which is less than the duration T2 required for the second frame F2 to display, which is not enough to support the full-duration display of the second frame F2, that is, the image displayed in the latter period of the second frame F2 will be in a dark state. Similarly, if the second frame F2 is switched to the third frame F3 while still adopting the refresh rate f1 to drive the backlight to emit light, since the refresh rate f1 is used to drive the backlight to emit light, the duration is shorter than (1/100)s, which is less than the duration of the third frame. The duration T3 required for the frame F3 to display is not enough to support the full-duration display of the third frame F3, that is, the image displayed in the latter period of the third frame F3 will be in a dark state.

It should be noted that, on the contrary, if the second frame F2 uses the refresh rate f2 to drive the backlight to emit light, by way of example, the second frame F2 is switched to the third frame F3 while still adopting the refresh rate f2 to drive the backlight to emit light (not shown in FIG. 3). Because the duration of using the refresh rate f2 to drive the backlight to emit light is longer than (1/48)s, the duration of the backlight corresponding to the second frame F2 will extend to the third frame F3, causing the third frame F3 to fail to accurately match the corresponding backlight, resulting in loss or even miss of the third frame F3.

It is appreciated that the duration of the target sub-backlight clock signal is equal to the preset period, and the preset period is the reciprocal of the preset refresh rate. In view of the above discussion, the preset period is the duration required for displaying the frame to be displayed, that is, the duration of the target sub-backlight clock signal is equal to the duration required for displaying the frame to be displayed, and the target sub-backlight clock signal is used to drive the backlight plate in the display panel to emit light within the duration of the target sub-backlight clock signal. Therefore, in this embodiment, the target sub-backlight clock signal generated according to the preset refresh rate of the frame to be displayed can realize that the light-emitting duration of the backlight is equal to the duration required for displaying the frame to be displayed. In the frame to be displayed, it can prevent the light-emitting duration of the backlight from being too short to result in a dark state image during a latter part of the period, and it can also prevent the light-emitting duration of the backlight from being a too long to occupy a next frame to be displayed, which causes the backlight of the next frame to be inaccurate, and results in image loss. As such, the quality of the display image of the display panel can be improved.

In an embodiment, step S1 may include but is not particularly limited to the following steps.

S11: acquiring a refresh rate of a sample display frame of the display panel and the preset refresh rate of the frame to be displayed.

It is appreciated that, in view of the above discussion, the frequency conversion state can be considered as a change in the refresh rate of the frame to be displayed relative to the refresh rate of the current display frame, or a difference between the refresh rate of the frame to be displayed and the refresh rate of the previous consecutive multiple frames being too large. Therefore, the refresh rate of the sample display frame in this embodiment can be considered as a value related to the refresh rate of the current display frame, or can be considered as a value related to the refresh rate of consecutive multiple frames used before the refresh rate of the frame to be displayed.

S12: determining that the frequency state is the frequency conversion state, when a difference between the preset refresh rate of the frame to be displayed and the refresh rate of the sample display frame exceeds a preset threshold.

Specifically, if the difference between the preset refresh rate of the frame to be displayed and the refresh rate of the sample display frame exceeds the preset threshold, it can be understood that the difference between the preset refresh rate of the frame to be displayed and the refresh rate of the sample display frame is too large; as discussed above, that is, in this embodiment, the case wherein the difference between the preset refresh rate of the frame to be displayed and the refresh rate of the current display frame is relatively large, or the case wherein the value related to the refresh rate of consecutive multiple frames used before the refresh rate of the frame to be displayed is relatively large, is determined as the frequency conversion state, and therefore, the target sub-backlight clock signal of the frame to be displayed can be adjusted by the method in step S22.

In an embodiment, the sample display frame is at least one of a preset number of frames set continuously before the frame to be displayed, and the refresh rate of the sample display frame is the at least one display frame. The refresh rate of one of the display frames in the frame, or the average value of the refresh rate of at least two display frames in the at least one display frame. In the above, the preset number is less than or equal to, for example, but not particularly limited to 1, 2, 3, 4, and 5. It should be noted that the preset number is not particularly limited to the aforementioned numbers, and the magnitude of the preset number can be adjusted according to actual conditions or requirements.

It is appreciated that the sample display frame in this embodiment is not particularly limited to the current display frame, and at least one of frames set continuously before the frame to be displayed can be comprehensively considered to determine whether to adjust the target sub-backlight clock signal of the frame to be displayed. The preset number can also be reasonably limited according to factors such as specifications of display panels and the refresh rate ranges. It should be noted that the preset number cannot be set too large, so as to prevent the impact of the refresh rate of the display frame that is located before the frame to be displayed and is far from the frame to be displayed on the refresh rate of the current display frame.

Further, the "average value" can be considered as an arithmetic average or a weighted average of the refresh rates of at least two of the corresponding display frames, wherein the weighted average can be considered as that the closer the refresh rate of the display frame to the frame to be displayed, the greater the weighting ratio of the refresh rate of the display frame. For example, the weighting ratio of the refresh rate of the current display frame can be the largest, and the refresh rate of the sample display frame can be comprehensively and more accurately determined through the weighted average.

In an embodiment, the sample display frame is the current display frame, and the refresh rate of the sample display frame is the refresh rate of the current display frame. It is appreciated that, in view of the above discussion, the weighting ratio of the refresh rate of the current display frame can be the largest. In this embodiment, only the refresh rate of the current display frame needs be considered to determine whether to adjust the target sub-backlight clock signal of the frame to be displayed, thereby ensuring the accuracy of the target sub-backlight clock signal of the frame to be displayed.

In view of the above discussion, the refresh rate of the current display frame can be considered as the reciprocal of the duration required to completely display the current image, and the preset refresh rate can be considered as the reciprocal of the duration required to completely display the image to be displayed.

In view of the above discussion, the preset refresh rate is different from the refresh rate of the current display frame, that is, the duration required to display the image to be displayed is not equal to the duration required to display the current display frame. It is appreciated that, in view of above discussion related to FIG. 3, if the sub-backlight signal corresponding to the current display frame is used to drive the backlight plate to emit light for the image to be displayed, because the duration of the sub-backlight signal corresponding to the current display frame matches the refresh rate of the current display frame, but does not match the refresh rate of the frame to be displayed, that is, the preset refresh rate, it will cause the problem of dark state images or image loss.

Further, in conjunction with the above description related to the step S22, it can be known that in this embodiment, in the case that the preset refresh rate is different from the refresh rate of the current display frame, the target sub-backlight clock signal generated according to the preset refresh rate of the frame to be displayed can realize that the light-emitting duration of the backlight is equal to the duration required for displaying the frame to be displayed. In the frame to be displayed, it can prevent the light-emitting duration of the backlight from being too short to result in a dark state image during a latter part of the period, and it can also prevent the light-emitting duration of the backlight from being a too long to occupy a next frame to be displayed, which causes the backlight of the next frame to be inaccurate, and results in image loss. As such, the quality of the display image of the display panel can be improved.

In an embodiment, after the step S1, the method may include but is not particularly limited to the following steps.

S3: determining that the target sub-backlight clock signal of the frame to be displayed is the sub-backlight clock signal of a current display frame, when the frequency state is not the frequency conversion state.

In conjunction with the step S 102, it can be seen that "the frequency state is not 1" can indicate that the preset refresh rate is the same as the refresh rate of the current display frame, that is, the reciprocal of the refresh rate of the current display frame is equal to the reciprocal of the preset refresh rate, that is, the duration of completely displaying the current display frame is equal to the duration required to completely display the frame to be displayed. Therefore, in this embodiment, the sub-backlight clock signal of the current display frame is acquired as the target sub-backlight clock signal of the frame to be displayed, which can realize that in the frame to be displayed, the duration of the backlight plate is equal to the duration required for displaying the frame to be displayed, which effectively prevents dark state images and image loss.

In an embodiment, after the step of adjusting a target sub-backlight clock signal of a frame to be displayed according to a preset rule and a preset refresh rate of the frame to be displayed, the method may include but not particularly limited to the following steps.

S4: acquiring a target sub-frame synchronization signal and a target data signal of the frame to be displayed of the display panel, wherein the target data signal is used to control a brightness of the frame to be displayed.

As shown in FIG. 2, each frame may have a corresponding sub-frame synchronization signal, and each sub-frame synchronization signal may be understood to include a first pulse. Further, multiple sub-frame synchronization signals corresponding to consecutive multiple frames are connected to form a frame synchronization signal. Each first pulse is used to trigger a corresponding frame to display according to the sub-data signal, and multiple sub-data signals corresponding to multiple frames are formed into a data signal. Further, a specific presentation mode of each frame can be considered as that after each first pulse in the frame synchronization signal, the corresponding frame displays the image corresponding to the sub-data signal at the corresponding refresh rate, that is, the duration required for each frame to be displayed is the reciprocal of the corresponding refresh rate.

S5, drive the backlight plate to emit light within the duration of the target sub-backlight clock signal according to the target sub-frame synchronization signal and the target sub-backlight clock signal, and driving sub-pixels to perform image display according to the target sub-frame synchronization signal and the target data signal when the backlight plate emits light.

In conjunction with the step S22 and step S4, it can be seen that after the first pulse in the target sub-frame synchronization signal, the frame to be displayed corresponding to the target sub-data signal is displayed at a preset refresh rate, that is, the duration required for displaying the frame to be displayed is the preset period. Further, in this embodiment, the target sub-backlight clock signal is triggered and generated according to the position of the first pulse in the target sub-frame synchronization signal, and the backlight plate is driven in real time to emit light within a duration of the target sub-backlight clock signal. Specifically, as shown in FIG. 2, for ease of comprehension, the second frame F2 being the frame to be displayed is taken as an example. That is, after the first pulse in the second frame F2, a target sub-backlight clock signal is generated to drive the backlight plate to emit light within the duration required for the presentation of the second frame F2, to realize that the backlight plate emits light from the start time of the second frame F2 continues to the end time of the second frame F2, and to drive the sub-pixels to display images to exhibit the frame to be displayed according to the target data signals when the backlight plate emits light.

In an embodiment, after the step of adjusting a target sub-backlight clock signal of a frame to be displayed according to a preset rule and a preset refresh rate of the frame to be displayed, the method may include but not particularly limited to the following steps.

S6: acquiring a target backlight duty cycle of the frame to be displayed.

Specifically, each frame can have a backlight duty cycle, which can be considered as a proportion of light-emitting duration of the corresponding backlight in a unit backlight duration in each frame, which can be understood that the greater the backlight duty cycle, the greater the brightness required for the corresponding frame, the greater the brightness finally presented. Therefore, the target backlight duty cycle here can also represent the brightness required for the image to be displayed and the brightness finally presented.

S7: generating a target sub-backlight modulation signal according to the target sub-backlight clock signal and the target backlight duty cycle, wherein the target sub-backlight modulation signal drives the backlight plate to emit light within the duration of the target sub-backlight clock signal.

Specifically, in conjunction with the above discussion and illustration in FIG. 2, after the frame synchronization signal is determined, multiple sub-frame synchronization signals that are used to trigger the display of multiple frames and each contains multiple first pulses are also determined accordingly, wherein, driven by the sub-backlight clock signal, combined with the backlight duty cycle, the sub-backlight modulation signal required for each frame is generated, to drive the backlight plate to emit light in the corresponding frame. Similarly, driven by the target sub-backlight clock signal, combined with the target backlight duty cycle to generate the target sub-backlight modulation signal required for the frame to be displayed, so as to drive the backlight plate to emit light in the frame to be displayed. Furthermore, as shown in FIG. 2, multiple sub-backlight modulation signals of multiple frames may be combined to form a backlight modulation signal, and finally the backlight modulation signals are used to drive the backlight to emit light in the multiple frames.

In this embodiment does not limit the waveform of the sub-backlight clock signals, as long as it is satisfied that the backlight plate can be considered to continuously emit light or emit light within the duration of the sub-backlight clock signal in conjunction with the above discussion, and it can be realized by reasonably set the waveform of the backlight clock signals and a specific manner in which the sub-backlight clock signal drives the backlight to emit light. For example, as shown in FIG. 2, each of the unit backlight clock signals may include at least one second pulse, and each of the second pulses may correspond to a unit backlight duration, that is, each second pulse may be triggered to form a repeating unit with at the corresponding backlight duty cycle within a unit light-emitting duration.

In an embodiment, the step S6 may include but is not particularly limited to the following steps.

S601: acquiring a data signal of the frame to be displayed, and generating a plurality of the target backlight duty cycles according to the data signal of the frame to be displayed, wherein the data signal controls the brightness of the frame to be displayed.

It is appreciated that the backlight duty cycle of each frame can be related to the corresponding data signal. In conjunction with the above discussion, since the data signal controls the brightness of the frame to be displayed, the data signal can represent the brightness required by the corresponding frame, and the greater the backlight duty cycle, the greater the brightness required by the corresponding frame, and the greater the brightness finally presented. Similarly, the data signal of the frame to be displayed can also represent the brightness required for the frame to be displayed. Therefore, in this embodiment, the data signal is used to determine the corresponding backlight duty cycle, which can increase the similarity between the brightness of the corresponding frame and the required brightness, and further improve the quality of the display images of the display panel.

An embodiment of the present application also provides a display panel, and the display panel includes but is not particularly limited to the following embodiments and combinations thereof.

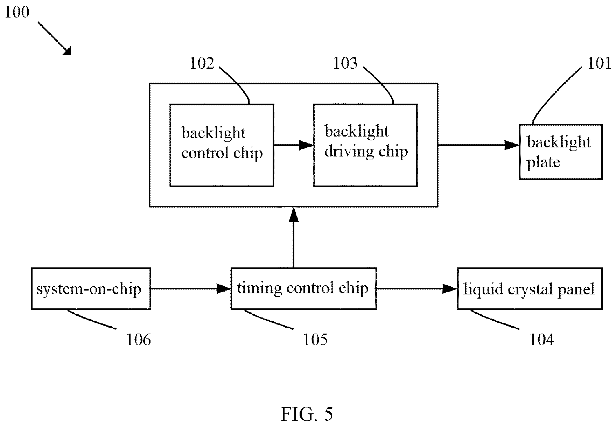

In an embodiment, as shown in FIGs. 4 and 5, the display panel 100 includes a backlight plate 101 for emitting light, and a backlight control chip 102 and a backlight driving chip 103 electrically connected to the backlight plate 101, wherein the backlight control chip 102 is configured to acquire a frequency state of the display panel; the backlight driving chip 103 is configured to adjust a target sub-backlight clock signal of a frame to be displayed according to a preset rule and a preset refresh rate of the frame to be displayed when the frequency state is a frequency conversion state, wherein a duration of the target sub-backlight clock signal is equal to a preset period, the preset period is a reciprocal of the preset refresh rate, and the target sub-backlight clock signal is used to drive a backlight plate in the display panel to emit light within the duration of the target sub-backlight clock signal; and wherein the backlight control chip 102 is integrated in the backlight driving chip 103, or the backlight control chip 102 and the backlight driving chip 103 are separately arranged.

The related functions of the backlight control chip 102 and the related functions of the backlight driving chip 103 can be referred to the relevant discussion on the method of driving the display panel above. Further, in conjunction with the above discussion, as shown in FIGs. 3 and 4, the preset rule may be stored in the backlight control chip 102, and according to the preset refresh rate and the preset rule, the target sub-backlight clock of the frame to be displayed is determined and transmitted to the backlight driving chip 103 to drive the backlight plate 101 to emit light. Specifically, the integration manner of the backlight control chip 102 and the backlight driving chip 103 is not particularly limited in this embodiment, as long as it can satisfy that the signal transmission and signal processing described above can be realized between the backlight control chip 102 and the backlight driving chip 103.

In an embodiment, as shown in FIGs. 3 and 4, the backlight control chip 102 is configured to acquire a refresh rate of a sample display frame of the display panel and the preset refresh rate of the frame to be displayed; and configured to determining that the frequency state is the frequency conversion state, when a difference between the preset refresh rate of the frame to be displayed and the refresh rate of the sample display frame exceeds a preset threshold.

Regarding how the backlight control chip 102 sets the frequency state, one can refer to the relevant discussion on the method of the step 102 above. Further, the backlight control chip 102 may also acquire a conclusion whether the refresh rate of the current display frame of the display panel is the same as the preset refresh rate.

In one embodiment, as shown in FIG. 3, the backlight control chip 102 is integrated in the backlight driving chip 103, and the backlight plate 101 and the backlight driving chip 103 are separately arranged; or as shown in FIG. 4, the backlight control chip 102 and the backlight driving chip 103 are separately arranged, and the backlight driving chip 103 is integrated in the backlight plate 101. It is appreciated that compared with the structure of FIG. 4, in the structure of FIG. 3, the backlight control chip 102 is integrated in the backlight driving chip 103, so that the data transmission and exchange rate between the backlight control chip 102 and the backlight driving chip 103 is relatively high; and compared with the structure of FIG. 3, in the structure of FIG. 4, the backlight driving chip 103 is integrated in the backlight plate 101, so that the backlight driving chip 103 transmits data to the backlight plate 101 at a relatively high rate.

In an embodiment, as shown in FIGs. 3 and 4, the display panel 100 further includes: a liquid crystal panel 104 disposed on a light-exiting side of the backlight plate 101; a timing control chip 105 is electrically connected to the backlight control chip 102, the backlight driving chip 103, and the liquid crystal panel 104, wherein the timing control chip 150 is configured to transmit the frequency state to at least one of the backlight control chip and the backlight driving chip to drive the backlight plate to emit light, and the timing control chip is configured to transmit scan data signals and display data signals to the liquid crystal panel 104 to drive liquid crystal molecules in liquid crystal to generate deflection.

Specifically, the timing control chip 105 can transmit frequency state, frame synchronization signals, and data signals to the backlight control chip 102, and transmit multiple backlight duty cycles to the backlight driving chip 103; and the backlight control chip 102 can generate and transmit the backlight clock signals to the backlight driving chip 103. Further, the backlight driving chip 103 can generate backlight modulation signals according to a plurality of backlight duty cycles and the backlight clock signals, and input the backlight modulation signals to the backlight plate 101 to drive the backlight plate 101 to emit light. Specifically, the timing control chip 105 may transmit scan data signals to a gate driving circuit in the liquid crystal panel 104, and transmit display data signals to a source driving circuit in the liquid crystal panel 104. Further, the gate driving circuit processes the scan data signals to form a plurality of gate signals, and each of the gate signals is loaded on a corresponding one of the plurality of sub-pixels; and the source driving circuit processes the display data signals to form a plurality of data signals, and each of the data signals is loaded on a corresponding one of the plurality of sub-pixels.

Further, as shown in FIGs. 3 and 4, the display panel 100 may further include a system-on-chip 106 electrically connected to the timing control chip 105, and the system-on-chip 106 may transmit an image input protocol and image signals to the timing control chip 105. In order to make the timing control chip 105 process the image signals according to the image input protocol to form, including but not limited to, the frequency state, the frame synchronization signals, the scan data signals, and the display data signals.

The present application provides a display panel and a driving method thereof. The method of driving the display panel includes: acquiring a frequency state of the display panel; determining a target sub-backlight clock signal of a frame to be displayed according to a preset rule and a preset refresh rate of the frame to be displayed when the frequency state is a frequency conversion state, wherein a duration of the target sub-backlight clock signal is equal to a preset period, the preset period is a reciprocal of the preset refresh rate, and the target sub-backlight clock signal is used to drive a backlight plate in the display panel to emit light within the duration of the target sub-backlight clock signal. The present application determines the target sub-backlight clock signal of the frame to be displayed according to the preset refresh rate and the preset rule. Since the duration of the target sub-backlight clock signal is equal to a duration required for displaying the frame to be displayed, it can realize that a light-emitting duration of the backlight is equal to the duration required for displaying the frame to be displayed. In the frame to be displayed, it can prevent the light-emitting duration of the backlight from being too short to result in a dark state image during a latter part of the period, and it can also prevent the light-emitting duration of the backlight from being a too long to occupy a next frame to be displayed, which causes the backlight of the next frame to be inaccurate, and results in image loss. As such, the quality of the display image of the display panel can be improved.

The display panel and its driving method provided by the embodiments of the present application are described in detail above. Specific examples are used in this document to explain the principles and implementation of the present invention. The descriptions of the above embodiments are only for understanding the method of the present invention and its core ideas, to help understand the technical solution of the present application and its core ideas, and a person of ordinary skill in the art should understand that it can still modify the technical solution described in the foregoing embodiments, or equivalently replace some of the technical features. Such modifications or replacements do not depart the spirit of the corresponding technical solutions beyond the scope of the technical solutions of the embodiments of the present application.

## Claims

1. A method of driving a display panel, which comprises:
acquiring a frequency state of the display panel;
adjusting a target sub-backlight clock signal of a frame to be displayed according to a preset rule and a preset refresh rate of the frame to be displayed when the frequency state is a frequency conversion state, wherein a duration of the target sub-backlight clock signal is equal to a preset period, the preset period is a reciprocal of the preset refresh rate, and the target sub-backlight clock signal is used to drive a backlight plate in the display panel to emit light within the duration of the target sub-backlight clock signal;
wherein the step of acquiring the frequency state of the display panel comprises:
acquiring a refresh rate of a sample display frame of the display panel and the preset refresh rate of the frame to be displayed; and
determining that the frequency state is the frequency conversion state, when a difference between the preset refresh rate of the frame to be displayed and the refresh rate of the sample display frame exceeds a preset threshold; and
wherein, after the step of acquiring the frequency state of the display panel, the driving method further comprises:
determining that the target sub-backlight clock signal of the frame to be displayed is the sub-backlight clock signal of a current display frame, when the frequency state is not the frequency conversion state.

2. The method of driving the display panel according to claim 1, wherein the sample display frame is at least one display frame in a preset number of continuously set display frames that are present before the frame to be displayed, and the refresh rate of the sample display frame is a refresh rate of one of the at least one display frame, or an average value of refresh rates of at least two of the at least one display frame.

3. The method of driving the display panel according to claim 2, wherein the sample display frame is the current display frame, and the refresh rate of the sample display frame is a refresh rate of the current display frame.

4. The method of driving the display panel according to claim 1, wherein after the step of adjusting the target sub-backlight clock signal of the frame to be displayed according to the preset rule and the preset refresh rate of the frame to be displayed, the method further comprises:
acquiring a target sub-frame synchronization signal and a target data signal of the frame to be displayed of the display panel, wherein the target data signal is used to control a brightness of the frame to be displayed; and
driving the backlight plate to emit light within the duration of the target sub-backlight clock signal according to the target sub-frame synchronization signal and the target sub-backlight clock signal, and driving sub-pixels to perform image display according to the target sub-frame synchronization signal and the target data signal when the backlight plate emits light.

5. The method of driving the display panel according to claim 1, wherein after the step of adjusting the target sub-backlight clock signal of the frame to be displayed according to the preset rule and the preset refresh rate of the frame to be displayed, the method further comprises:
acquiring a target backlight duty cycle of the frame to be displayed;
generating a target sub-backlight modulation signal according to the target sub-backlight clock signal and the target backlight duty cycle, wherein the target sub-backlight modulation signal drives the backlight plate to emit light within the duration of the target sub-backlight clock signal.

6. The method of driving the display panel according to claim 5, wherein the step of acquiring the target backlight duty cycle of the frame to be displayed comprises:
acquiring the target data signal of the frame to be displayed, and generating the target backlight duty cycle according to the target data signal of the frame to be displayed, wherein the target data signal is used to control a brightness of the frame to be displayed.

7. A method of driving a display panel, which comprises:
acquiring a frequency state of the display panel;
adjusting a target sub-backlight clock signal of a frame to be displayed according to a preset rule and a preset refresh rate of the frame to be displayed when the frequency state is a frequency conversion state, wherein a duration of the target sub-backlight clock signal is equal to a preset period, the preset period is a reciprocal of the preset refresh rate, and the target sub-backlight clock signal is used to drive a backlight plate in the display panel to emit light within the duration of the target sub-backlight clock signal.

8. The method of driving the display panel according to claim 7, wherein the step of acquiring the frequency state of the display panel comprises:
acquiring a refresh rate of a sample display frame of the display panel and the preset refresh rate of the frame to be displayed; and
determining that the frequency state is the frequency conversion state, when a difference between the preset refresh rate of the frame to be displayed and the refresh rate of the sample display frame exceeds a preset threshold.

9. The method of driving a display panel according to claim 8, wherein the sample display frame is at least one display frame in a preset number of continuously set display frames that are present before the frame to be displayed, and the refresh rate of the sample display frame is a refresh rate of one of the at least one display frame, or an average value of refresh rates of at least two of the at least one display frame.

10. The method of driving the display panel according to claim 9, wherein the sample display frame is a current display frame, and the refresh rate of the sample display frame is a refresh rate of the current display frame.

11. The method of driving the display panel according to claim 7, wherein after the step of acquiring the frequency state of the display panel, the driving method further comprises:
determining that the target sub-backlight clock signal of the frame to be displayed is the sub-backlight clock signal of a current display frame, when the frequency state is not the frequency conversion state.

12. The method of driving the display panel according to claim 7, wherein after the step of adjusting the target sub-backlight clock signal of the frame to be displayed according to the preset rule and the preset refresh rate of the frame to be displayed, the method further comprises:
acquiring a target sub-frame synchronization signal and a target data signal of the frame to be displayed of the display panel, wherein the target data signal is used to control a brightness of the frame to be displayed; and
driving the backlight plate to emit light within the duration of the target sub-backlight clock signal according to the target sub-frame synchronization signal and the target sub-backlight clock signal, and driving sub-pixels to perform image display according to the target sub-frame synchronization signal and the target data signal when the backlight plate emits light.

13. The method of driving the display panel according to claim 7, wherein after the step of adjusting the target sub-backlight clock signal of the frame to be displayed according to the preset rule and the preset refresh rate of the frame to be displayed, the method further comprises:
acquiring a target backlight duty cycle of the frame to be displayed;
generating a target sub-backlight modulation signal according to the target sub-backlight clock signal and the target backlight duty cycle, wherein the target sub-backlight modulation signal drives the backlight plate to emit light within the duration of the target sub-backlight clock signal.

14. The method of driving the display panel according to claim 13, wherein the step of acquiring the target backlight duty cycle of the frame to be displayed comprises:
acquiring the target data signal of the frame to be displayed, and generating the target backlight duty cycle according to the target data signal of the frame to be displayed, wherein the target data signal is used to control a brightness of the frame to be displayed.

15. A display panel, comprising a backlight plate for emitting light, and a backlight control chip and a backlight driving chip electrically connected to the backlight plate, wherein:
the backlight control chip is configured to acquire a frequency state of the display panel;
wherein the backlight driving chip is configured to adjust a target sub-backlight clock signal of a frame to be displayed according to a preset rule and a preset refresh rate of the frame to be displayed when the frequency state is a frequency conversion state, wherein a duration of the target sub-backlight clock signal is equal to a preset period, the preset period is a reciprocal of the preset refresh rate, and the target sub-backlight clock signal is used to drive a backlight plate in the display panel to emit light within the duration of the target sub-backlight clock signal; and
wherein the backlight control chip is integrated in the backlight driving chip, or the backlight control chip and the backlight driving chip are separately arranged.

16. The display panel according to claim 15, wherein the backlight control chip is configured to acquire a refresh rate of a sample display frame of the display panel and the preset refresh rate of the frame to be displayed; and configured to determining that the frequency state is the frequency conversion state, when a difference between the preset refresh rate of the frame to be displayed and the refresh rate of the sample display frame exceeds a preset threshold.

17. The display panel according to claim 15, wherein the backlight driving chip is further configured to determine that the target sub-backlight clock signal of the frame to be displayed is the sub-backlight clock signal of a current display frame, when the frequency state is not the frequency conversion state.

18. The display panel according to claim 15, wherein the backlight driving chip is configured to:
acquire a target sub-frame synchronization signal and a target data signal of the frame to be displayed of the display panel, wherein the target data signal is used to control a brightness of the frame to be displayed; and
drive the backlight plate to emit light within the duration of the target sub-backlight clock signal according to the target sub-frame synchronization signal and the target sub-backlight clock signal, and driving sub-pixels to perform image display according to the target sub-frame synchronization signal and the target data signal when the backlight plate emits light.

19. The display panel according to claim 15, wherein the backlight control chip is integrated in the backlight driving chip, and the backlight plate and the backlight driving chip are separately arranged; or the backlight control chip and the backlight driving chip are separately arranged, and the backlight driving chip is integrated in the backlight plate.

20. The display panel according to claim 15, wherein the display panel further comprises:
a liquid crystal panel disposed on a light-exiting side of the backlight plate;
a timing control chip electrically connected to the backlight control chip, the backlight driving chip, and the liquid crystal panel, wherein the timing control chip is configured to transmit the frequency state to at least one of the backlight control chip and the backlight driving chip to drive the backlight plate to emit light, and the timing control chip is configured to transmit scan data signals and display data signals to the liquid crystal panel to drive liquid crystal molecules in liquid crystal to generate deflection.
